# EUROPÄISCHE PATENTSCHRIFT

(11) **EP 2 042 412 B1**
(45) Veröffentlichungstag und Bekanntmachung des Hinweises auf die Patenterteilung: **31.08.2011**
(21) Anmeldenummer: 08105212.8
(22) Anmeldetag: 03.09.2008
(51) Int. Cl.: B62D 61/12

(54) **Betätigungselement für Achslifte und Nachrüstsatz für Achsliftbetätigungselemente**
Actuation element for axle lifts and retrofit kit for axle lift actuation elements
Elément d'actionnement pour système de relevage d'axe et ensemble de rééquipement pour éléments d'actionnement du système de relevage d'axe

(30) Priorität: 26.09.2007 DE 102007045849
(43) Veröffentlichungstag der Anmeldung: 01.04.2009
(73) Patentinhaber: BPW Bergische Achsen KG, 51674 Wiehl (DE)
(72) Erfinder: Luckau, Bianca, 53797, Lohmar (DE); Steinbach, Rolf, 51643, Gummersbach (DE)
(74) Vertreter: Christophersen & Partner

(56) Entgegenhaltungen:
- EP-A- 0 470 025
- EP-A- 0 591 614
- EP-A- 0 961 726
- US-A- 3 208 803

## Beschreibung

Die Erfindung betrifft ein Betätigungselement für Achslifte luftgefederter Fahrzeugachsen mit einer entlang eines Führungselements verfahrbaren Betätigungsstange. Darüber hinaus betrifft die Erfindung einen Nachrüstsatz für Achsliftbetätigungselemente mit einem innerhalb einer Buchse angeordneten Führungselement zur Führung einer Betätigungsstange.

Die EP 0 961 726 A offenbart einen Achslift für luftgefederte Fahrzeugachsen mit einem Betätigungselement, dessen Betätigungsstange in einer als Axialführung dienenden Gleitbuchse geführt ist. Die Gleitbuchse ist dabei an dem Gehäuse des Betätigungselements befestigt.

Aus der EP 0 591 614 A ist ein Kolben-Zylinder-Aggregat bekannt geworden, bei welchem die einen rechteckigen Querschnitt aufweisende Kolbenstange von einer ebenfalls rechteckigen Öffnung eines Axialvorsprungs des Zylinderdeckels umschlossen und so gegen Verdrehen gesichert ist

Die US 3 208 803 A zeigt ein Führungslager und eine Stangendichtung, bei denen die als Kolben dienende Stange innerhalb eines Gehäuses eines auswechselbaren Einsatzes geführt ist Zwischen dem Gehäuse und der Stange ist eine axial fixierte Hülse angeordnet.

Luftgefederte Fahrzeugachsen sind üblicherweise an auf beiden Seiten des Fahrzeugs angeordneten Längslenkern festgelegt, deren in Fahrtrichtung weisendes Ende am Fahrzeugchassis angelenkt und deren in Fahrtrichtung hinteres Ende über eine Luftfeder gegenüber dem Fahrzeugchassis federnd angestützt ist. Insbesondere bei Schwerlast-Nutzfahrzeugen sind zur Übertragung der bei beladenem Fahrzeug oftmals erheblichen Gewichtskräfte mehrere Achsen hintereinander angeordnet, um auf diese Weise eine Verteilung der Kräfte auf mehrere Achsen zu erreichen. In anderen Situationen, in denen das Fahrzeug weniger Gewicht zu tragen hat, etwa nach dem Entladen oder beim Transport leichtgewichtiger Güter, sind nicht alle Achsen des Fahrzeugs zur Übertragung der Gewichtskräfte erforderlich. In solchen Situationen sind die nicht erforderlichen Achsen sogar nachteilig, da sie z.B. den Rollwiderstand des Fahrzeugs und damit dessen Kraftstoffverbrauch erhöhen.

Bei nicht oder weit unterhalb des zulässigen Gewichts beladenen Fahrzeugen werden die Luftfedern der nicht erforderlichen Achsen daher entlüftet und die Achsen über Achstifte angehoben, wodurch die Räder den Kontakt zur Fahrbahn verlieren. Die Achslifte sind üblicherweise über Konsolen unterhalb der Längslenker im Bereich deren Anlenkung am Chassis festgelegt Über ein Betätigungselement des Achslifts wird eine Kraft von unten gegen den Längslenker gerichtet, so dass dieser um seinen chassisfesten Anlenkpunkt in die angehobene Stellung verschwenkt.

Als Betätigungselemente werden z.B. Mebranzylinder eingesetzt, bei denen zum Anheben der Achse eine zylindrische Betätigungsstange in Richtung des Längslenkers verfahrbar ist, wobei die Verfahrbewegung über ein Führungselement geführt und die Betätigungsstange im Bereich der Anlage am Längslenker mit einem Kontaktelement zur Übertragung der Kräfte, etwa einer Rolle, versehen ist. Bei abgesenkter Achse befindet sich die Betätigungsstange in ihrer hinteren Stellung, in welcher sie weitgehend unbelastet innerhalb des Führungselements steckt.

Oftmals verbleibt die Betätigungsstange über lange Zeiträume in der hinteren Stellung. Während dieser Zeit kann es aufgrund von z.B. Straßenunebenheiten vorkommen, dass sich die Betätigungsstange innerhalb des Führungselements dreht

Diese Drehbewegungen der Betätigungsstange haben sich in der Praxis als nachteilig erwiesen, da auch das am freien Ende der Betätigungsstange angeordnete Kontaktelement eine gegenüber dem Längslenker verdrehte Stellung einnimmt, was beim anschließenden Anheben der Achse zu einem Verkanten des Kontaktelements oder zu auf das Kontaktelement wirkenden Querkräften führen kann, womit die Gefahr von Beschädigungen des Betätigungselements, etwa durch ein Verbiegen der Betätigungsstange verbunden ist. Auch kann es zu einem erhöhten Verschleiß des Führungselements kommen.

Es ist die Aufgabe der Erfindung, die Gefahr von Beschädigungen bei Betätigungselementen für Achslifte luftgefederter Fahrzeugachsen zu reduzieren und einen Nachrüstsatz als Ersatzteil für beschädigte oder verschlissene Betätigungselemente anzugeben.

Zur Lösung dieser Aufgabe wird bei einem Betätigungselement der eingangs genannten Art vorgeschlagen, dass die Betätigungsstange innerhalb des Führungselements verdrehsicher geführt ist, wobei das Führungselement innerhalb einer gehäusefesten Buchse verdrehsicher gegenüber einem Gehäuse angeordnet ist, wobei, das Führungselement und die Buchse über miteinander korrespondierende Sicherungselemente gegeneinander gegen Verdrehen gesichert sind, wobei das Sicherungselement des Führungselements ein Vorsprung an dem Mantel des Führungselements ist, und das Sicherungselement der Buchse eine an der Innenfläche und / oder Stirnfläche der Buchse ausgebildete Ausnehmung ist.

Durch eine solche Führung ist die Betätigungsstange selbst bei schwierigen Straßenverhältnissen zuverlässig gegen Verdrehen gesichert, so dass sich die voreingestellte Lage des Kontaktelements gegenüber dem Längslenker nicht ändert und ungewollte Querkräfte nicht auf die Betätigungsstange einwirken. Die Gefahr eines Verbiegens und die damit verbundene Gefahr eines Ausfalls des Betätigungselements wird reduziert.

Zur Lösung der vorstehenden Aufgabe wird bei einem Nachrüstsatz der eingangs genannten Art vorgeschlagen, dass die Buchse mit einer am Gehäuse des Achsliftbetätigungselements festlegbaren Flanschplatte verbunden ist, wobei das Führungselement und die Buchse über miteinander korrespondierende Sicherungselemente gegeneinander gegen Verdrehen gesichert sind, wobei das Sicherungselement des Führungselements ein Vorsprung an dem Mantel des Führungselements ist, und das Sicherungselement der Buchse eine an der Innenfläch und / oder Stirnfläche der Buchse ausgebildete Ausnehmung ist.

Mit Hilfe des Nachrüstsatzes können bei Betätigungselementen verschlissene Führungselemente gegen entsprechende Neuteile ersetzt werden. Dies wird durch die Anordnung der Buchse an der Flanschplatte möglich, da sich durch Lösen der Flanschplatte auch die Buchse und mit dieser das innerhalb der Buchse angeordnete und axial in beide Richtungen gesicherte Führungselement vom Gehäuse des Betätigungselements lösen lässt, wonach dann der Monteur die axialen Sicherungen lösen und ein neues Führungselement einsetzen kann.

Einzelheiten und Vorteile eines Betätigungselements für Achslifte luftgefederter Fahrzeugsachsen sowie eines Nachrüstsatzes für Achsliftbetätigungselemente werden nachfolgend anhand der beigefügten Zeichnungen eines bevorzugten Ausführungsbeispiels erläutert. Darin zeigen:
- Figur 1:: in einer perspektivischen, überwiegend seitlichen Darstellung einen unterhalb eines Längslenkers angeordneten Achslift,
- Figur 2:: eine perspektivische Darstellung des Betätigungselements des in Figur 1 dargestellten Achslifts,
- Figur 3:: eine seitliche, teilweise geschnittene Ansicht des Betätigungselements aus Figur 2,
- Figur 4:: eine Vollschnittdarstellung durch einen Nachrüstsatz und weitere Bauteile eines Achsliftbetätigungselements, gemäß der Darstellung in Figur 3,
- Figur 5:: eine Draufsicht auf das Betätigungselement, wobei zur Veranschaulichung einige Elemente nicht dargestellt sind,
- Figur 6:: eine perspektivische Ansicht des Betätigungselements, wobei zur Veranschaulichung u. a. das Führungselement nicht dargestellt ist und
- Figur 7:: eine perspektivische Ansicht eines Führungselements.

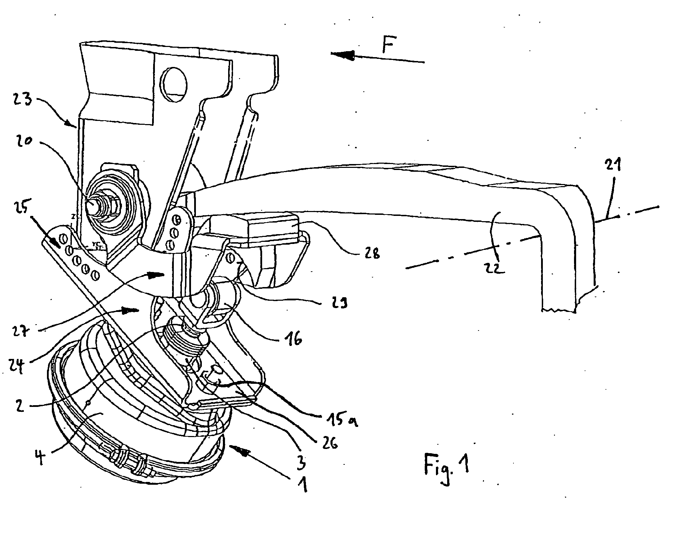

In Fig. 1 sind Teile einer luftgefederten Fahrzeugachse mit einem im Bereich eines chassisfesten Lagerbolzens 20 vorgesehenen Achslift dargestellt, wobei von dem die Fahrzeugräder tragenden Achskörper 21 nur die Mittellinie eingezeichnet ist. Der Achskörper 21 ist mit Längslenkern 22 auf beiden Seiten des Fahrzeugs fest verbunden. Die Verbindung des Achskörpers 21 mit den Längslenkern 22 erfolgt üblicherweise über Schraubbügel. Die Längslenker 22 sind an ihren in Fahrtrichtung F vorn liegenden Enden mittels eines ein Schwenkgelenk bildenden Lagerbolzens 20 an einer Konsole 23 schwenkbar, die ihrerseits von unten gegen das Fahrzeugchassis verschweißt ist. Am gegenüberliegenden Ende sind die Längslenker 22 über eine in den Figuren nicht dargestellte Luftfeder gegenüber dem Fahrzeugrahmen federnd abgestützt. Zwischen dem Fahrzeugrahmen und den Längslenkern 21 kann sich zudem ein Stoßdämpfer befinden.

Um die in Fig. 1 in ihrer abgesenkten Fahrstellung dargestellte Luftfederachse, falls diese für den Fahrbetrieb nicht benötigt wird, in ihre angehobene Stellung zu heben, ist am unteren Ende der Konsole 23 ein Achslift vorgesehen. Der Achslift besteht aus einer U-förmigen Aufnahme 24 zur Befestigung des Betätigungselements 1. Die Aufnahme 24 ist um die Achse des Lagerbolzens 20 schwenkbar in verschiedenen Schwenkstellungen gemäß einem Bohrungsregister 25 festlegbar.

Bei dem in den Figuren des Ausführungsbeispiels dargestellten Betätigungselement 1 handelt es sich um einen Membranzylinder. Dieser ist unterhalb der Aufnahme 24 über Schraubverbindungen 15 a, 15 b an einer ebenen Trägerplatte 26 der Aufnahme 24 festgelegt. Die Trägerplatte 26 weist eine Öffnung auf, durch welche eine Betätigungsstange 2 des Betätigungselements 1 hindurchragt. Die Betätigungsstange 2 ist an ihrem vorderen Ende mit einem rollenförmigen Kontaktelement 16 zur Übertragung der zum Anheben des Längslenkers 22 und damit der Achse 21 erforderlichen Betätigungskräfte versehen.

Die Übertragung der Betätigungskräfte erfolgt jedoch nicht direkt von der Rolle 16 auf den Längslenker 22, sondern über einen zum Achslift gehörenden Schwenkarm 27, der ebenfalls um die Achse des Lagerbolzens 20 schwenkbar ist. An seinem freien Ende weist der Schwenkarm 27 ein Pufferelement 28 auf, mit welchem sich der Schwenkarm 27 von unten gegen die Unterseite des Längslenkers 22 legen kann. An seiner Unterseite weist der Schwenkarm 27, dem Pufferelement 28 abgewandt, eine Abrollfläche 29 für die Rolle 16 des Betätigungselements 1 auf. Diese Abrollfläche 29 weist die Kontur einer Evolvente auf, so dass die Betätigungsstange 2 unabhängig von der Schwenkstellung des Längslenkers 22 stets senkrecht auf der Abrollfläche 29 steht. Hierdurch wird vermieden, dass Querkräfte auf die Betätigungsstange 2 wirken.

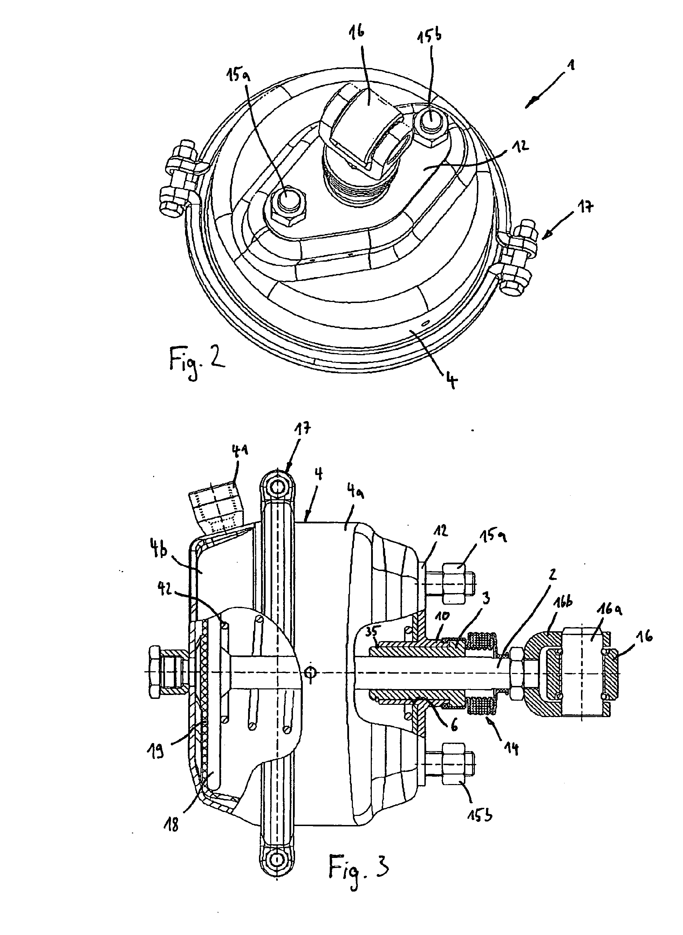

Zur Vermeidung unerwünschter Querkräfte ist die Betätigungsstange 2 entlang des Führungselements 3 zudem verdrehsicher geführt, was nachfolgend anhand der Fign. 2 bis 7 erläutert werden wird.

In Fig. 2 ist das Betätigungselement 1 in einer perspektivischen Ansicht dargestellt. Zu erkennen sind die beiden Verschraubungen 15 a, 15 b, über welche das Betätigungselement 1 an der Aufnahme 24 des Achslifts befestigt wird. Das Betätigungselement 1 weist ein aus zwei Hälften 4 a, 4 b zusammengesetztes Gehäuse 4 auf, die über eine Spannringanordnung 17, bestehend aus zwei Spannringhälften sowie zwei zum Umfang des Gehäuses tangential ausgerichteten Spannschrauben, gegeneinander festgelegt sind. Zu erkennen ist ferner die als Kontaktelement dienende, frei drehbar gelagerte Rolle 16.

Anhand Fig. 3 werden nachfolgend Einzelheiten des Betätigungselements 1 erläutert. Zu erkennen ist, dass die Betätigungsstange 2 an ihrem freien, aus dem Gehäuse 4 ragenden Ende ein Kontaktelement in Form einer metallischen Rolle 16 aufweist. Über diese Rolle 16 werden die Betätigungskräfte von der Betätigungsstange 2 auf den Längslenker übertragen. Die Rolle 16 ist von zylindrischer Form und über einen Lagerbolzen 16a frei drehbar innerhalb einer U-förmigen, den Lagerbolzen 16b aufnehmenden Haltegabel 16b gelagert. Die Haltegabel 16b ist auf einen am freien Ende der Betätigungsstange 2 vorgesehenen Gewindeabschnitt aufgeschraubt, wobei die Drehstellung der Gabel 16b über eine Konturmutter 44 festgelegt ist.

An ihrem gehäuseinneren Ende ist die Betätigungsstange 2 mit einem flachen Druckteller 18 versehen, der über eine den Innenraum des Gehäuses 4 in zwei Kammern unterteilende Membran 19 mit einem Druck beaufschlagbar ist. Zur Druckbeaufschlagung des Drucktellers 18 ist am Gehäuse 4 eine Öffnung 41 vorgesehen, die der Druckluftzu- bzw. - abfuhr dient. Bei Druckluftzufuhr wird die Druckplatte 18 mit einem Druck beaufschlagt und entgegen der Kraft der auf der anderen Seite des Drucktellers 18 angeordneten Rückstellfeder 42 bewegt. Dabei wird die Betätigungsstange 2 axial aus dem Gehäuse 4 herausgefahren. Die Verfahrbewegung erfolgt in Axialrichtung der Betätigungsstange 2, wobei diese Bewegung von einem beim Ausführungsbeispiel als Kunststoffbuchse ausgebildeten Führungselement 3 geführt wird. Bei dem Führungselement 3 handelt es sich um eine Kunststoff-Buchse, die eine schmiermittelfreie Führung bzw. Gleitlagerung der Betätigungsstange 2 erlaubt. Zum Schutz vor Verunreinigungen ist zwischen der Betätigungsstange 2 und einer das Führungselement 3 aufnehmenden, metallischen Buchse 10 ein Faltenbalg 14 vorgesehen, der das Gehäuseinnere staub- bzw. schmutzdicht abschirmt.

Die Buchse 10 ist mit einer Flanschplatte 12 baueinheitlich, z. B. durch Schweißen, verbunden. Gemeinsam mit der Buchse 10 und der Flanschplatte 12 können als Nachrüstsatz das Führungselement 3, der Faltenbalg 14 und der Sicherungsring 35 als einheitlicher Bausatz an dem Gehäuse 4 des Betätigungselements 1 festgelegt werden, wobei sich über die parallel zum Gehäuseboden verlaufende Flanschplatte 12 gleichzeitig eine mechanische Verstärkung des Gehäusebodens ergibt. Hierzu werden die auf die Betätigungsstange 2 aufgeschraubten Bauteile 16 b und 44 entfernt und der Nachrüstsatz mit der Öffnung 5 des Führungselements 3 über die Betätigungsstange 2 geschoben und am Gehäuse 4 festgelegt. Alternativ kann die Buchse 10 auch in eine Öffnung des Bodens der Gehäusehälfte 4a eingeschweißt werden, wobei dann auf die bei der Nachrüstlösung vorgesehene Flanschplatte 12 verzichtet werden kann. In diesem Fall ist jedoch der Austausch eines verschlissenen Führungselements 3, wie nachfolgend noch näher zu erläutern sein wird, nicht oder nur mit erhöhtem Aufwand möglich.

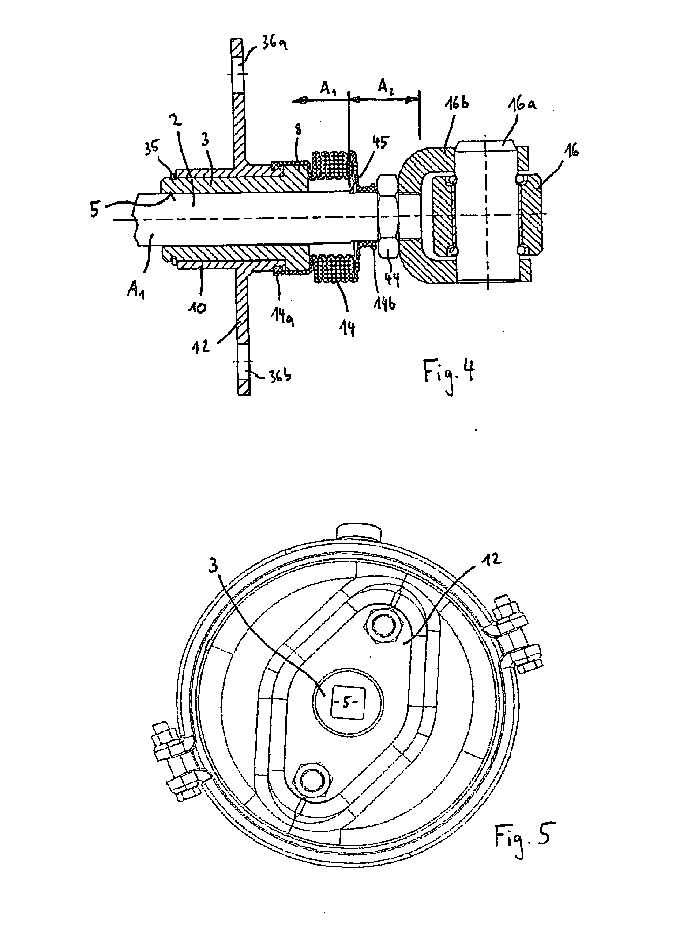

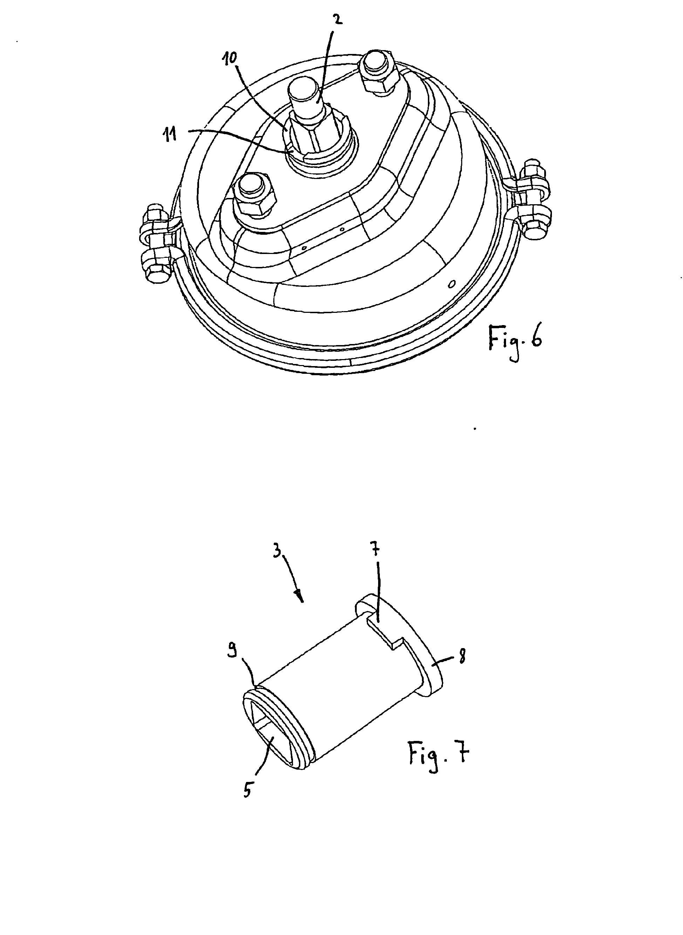

Wie Fig. 4 erkennen lässt, weist die Betätigungsstange 2 einen ersten Abschnitt A₁ mit unrundem Querschnitt auf, der im Wesentlichen quadratisch ausgebildet ist, vgl. auch die perspektivische Darstellung in Fig. 6. Die Länge des quadratischen Abschnitts A₁ ist so bemessen, dass über den gesamten Verfahrweg der Betätigungsstange 2 entlang des Führungselements 3 stets ein unrunder Querschnitt im Inneren des Führungselements 3 anliegt. Auch die Öffnung 5 des Führungselements 3 ist von unrunder, mehreckiger Querschnittsgeometrie, so dass die Betätigungsstange 2 und das Führungselement 3 gegeneinander gegen Verdrehen gesichert sind, vgl. Fig. 5. Beim Ausführungsbeispiel weist die Öffnung 5 einen im Wesentlichen quadratischen Querschnitt auf.

Beim Führungselement 3 handelt es sich um eine Kunststoff-Gleitlagerbuchse, die innerhalb einer metallischen Buchse 10 verdrehsicher aufgenommen ist. Die Verdrehsicherung der Kunststoffbuchse 3 gegenüber der äußeren Buchse 10 kann entweder durch Einpressen des Führungselements 3 in das Innere der Buchse 10 erfolgen, oder, wie beim Ausführungsbeispiel, durch miteinander korrespondierende Sicherungselemente 7, 11 z.B. in Form von Vor- oder Rücksprüngen realisiert sein.

Die Funktionsweise der Sicherungselemente 7, 11 lässt sich am besten den Fign. 6 und 7 entnehmen. In Fig. 6 dargestellt ist eine perspektivische Ansicht des Betätigungselements, wobei u.a. das zwischen dem quadratischen Abschnitt der Betätigungsstange 2 und der Buchse 10 angeordnete Führungselement 3 und der Balg 14 zur Veranschaulichung nicht dargestellt sind. Zu erkennen ist, dass die Buchse 10 stirnseitig mit nutförmigen Sicherungselementen 11 versehen ist, die einander um 180° über den Umfang der Buchse 10 versetzt gegenüberliegend angeordnet sind. Alternativ könnten die Sicherungselemente 11 auch am Innenumfang der Buchse 10 angeordnet sein.

Die Darstellung in Fig. 7 lässt die korrespondierenden Sicherungselemente 7 der Buchse 3 erkennen. Diese werden von am Mantel des Führungselements 3 ausgebildeten Vorsprüngen 7 gebildet, die nach Art einer Feder-Nut-Verbindung in die Aussparungen 11 der Buchse 10 eingreifen und so für eine Verdrehsicherung des Führungselements 3 innerhalb der Buchse 10 sorgen.

Die axiale Sicherung des Führungselements 3 erfolgt über dessen Flanschbereich 8, der sich von außen her an einer Stirnseite der Buchse 10 abstützt. In der anderen Richtung erfolgt die Axialsicherung des Führungselements 3 über einen Sicherungsring 35, der nach dem Einschieben des Führungselements 3 in die Buchse 10 in einer Außenumfangsnut 9 des Führungselements 3 an dessen dem Flanschbereich 8 gegenüberliegenden Ende verrastet wird, vgl. Fig. 4. Auf diese Weise ist das Führungselement 3 in axialer Richtung innerhalb der Buchse 10 lagegesichert.

Aufgrund dieser Axialsicherung kann ein verschlissenes Führungselement 3 von außerhalb des Gehäuses 4 nicht aus der Buchse 10 herausgezogen und gegen eine neue Buchse ersetzt werden. Auch ist es nicht oder nur unter Einsatz von in der Praxis kaum zur Verfügung stehendem Spezialwerkzeug möglich, von gehäuseinnen her an den Sicherungsring 35 zu gelangen und auf diese Weise die Axialsicherung des Führungselements 3 zu lösen. Denn die im Inneren des Gehäuses 4 angeordnete, die beiden Gehäusehälften 4a, 4b mit einer erheblichen Vorspannkraft beaufschlagende Feder 42 erschwert das Öffnen des Gehäuses 4. Aufgrund dieser Federkraft ist für den Monteur nicht ohne Verletzungsrisiko möglich, die Spannringanordnung 17 und mit dieser die Hälften 4a, 4b des Gehäuses 4 mit herkömmlichen Werkzeugen voneinander zu lösen. Üblicherweise ist das Gehäuse 4 daher sogar mit einem Warnhinweis versehen, der den Monteur vor dem Lösen der Spannringanordnung 17 warnt. Ebenso wenig ist es möglich, die Hälften 4a, 4b des Gehäuses 4 mit Standardwerkzeugen zusammenzusetzen. Hierzu sind Spezialwerkzeuge bzw. Spannvorrichtungen erforderlich, die in der Praxis jedoch nicht zur Verfügung stehen. Damit ist der Austausch eines verschlissenen Führungselements 3 nicht möglich, so dass das Betätigungselement 1 insgesamt gegen ein Neuteil zu ersetzten ist.

Der Austausch eines verschlissenen Führungselements 3 wird erst aufgrund des Nachrüstsatzes bzw. der Flanschplatte 12 mit herkömmlichen Werkzeugen möglich. Die Bauteile des Nachrüstsatzes sind nicht federbelastet, weshalb sich die Flanschplatte 12 und mit dieser die Buchse 10, das Führungselement 3 und der die Axialsicherung bewirkende Ring 35 ohne weiteres vom Gehäuse 4 lösen lassen. Nach dem Lösen der Flanschplatte 12 ist der Zugriff auf die innere Axialsicherung des Führungselements 3 frei, so dass dieses ersetzt werden kann. Auch können die Flanschplatte 12, die Buchse 10, das Führungselement 3, der Ring 35 und ggf. ein Faltenbalg 14 als bauliche Einheit gegen eine neue Einheit ersetzt werden.

Einzelheiten der Anordnung des Faltenbalgs lassen sich der Darstellung in Fig. 4 entnehmen. Danach ist der Faltenbalg 14 zwischen einer am Außenumfang der Buchse 10 vorgesehenen Nut und einem aus dem Gehäuse ragenden Abschnitt A₂ der Betätigungsstange 2 mit rundem Querschnitt vorgesehen, um das Innere des Gehäuses 4 des Betätigungselements 1 vor Verunreinigungen, etwa Staub, Schmutzwasser oder Ähnlichem zu schützen. Der Abschnitt A₂ der Betätigungsstange ist von rundem Querschnitt. Das eine Ende 14 a des Faltenbalgs 14 ist in einer Außenumfangsnut der Buchse 10 aufgenommen, wohingegen das andere Ende 14 b auf dem zylindrischen Umfang der Betätigungsstange 2 im Bereich A₂ zwischen einer eine erste axiale Anschlagfläche bereitstellenden Mutter 44 und einer im Übergang vom quadratischen auf den runden Querschnitt sich ergebenden zweiten Anschlagfläche 45 gesichert ist. Es können herkömmliche Bälge 14 mit ringförmigen Endbereichen 14a, 14b verwendet werden.

### Bezugszeichen

- 1: Betätigungselement
- 2: Betätigungsstange
- 3: Führungselement
- 4: Gehäuse
- 4 a: Gehäusehälfte
- 4 b: Gehäusehälfte
- 5: Öffnung
- 6: Gehäuseöffnung
- 7: Sicherungselement
- 8: Flansch
- 9: Nut
- 10: Buchse
- 11: Sicherungselement
- 12: Flanschplatte
- 13: Sicherungsring
- 14: Faltenbalg
- 14 a: Faltenbalgende
- 14 b: Faltenbalgende
- 15 a: Verschraubung
- 15 b: Verschraubung
- 16: Kontaktelement, Rolle
- 16a: Lagerbolzen
- 16b: Haltegabel
- 17: Spannringanordnung
- 18: Druckteller
- 19: Membran
- 20: Lagerbolzen
- 21: Achskörper
- 22: Längslenker
- 23: Konsole
- 24: Aufnahme
- 25: Lochregister
- 26: Trägerplatte
- 27: Schwenkarm
- 28: Pufferelement
- 29: Abrollfläche
- 35: Sicherungsring
- 36 a: Montagebohrung
- 36 b: Montagebohrung
- 41: Öffnung
- 42: Rückstellfeder
- 44: Mutter
- A₁: Abschnitt mit unrundem Querschnitt
- A₂: Abschnitt mit rundem Querschnitt

## Patentansprüche

1. Betätigungselement für Achslifte luftgefederter Fahrzeugachsen mit einer entlang eines Führungselements (3) verfahrbaren Betätigungsstange (2),
wobei die Betätigungsstange (2) innerhalb des Führungselements (3) verdrehsicher geführt ist, **dadurch gekennzeichnet, dass** das Führungselement (3) innerhalb einer gehäusefesten Buchse (10) verdrehsicher gegenüber einem Gehäuse (4) angeordnet ist, wobei das Führungselement (3) und die Buchse (10) über miteinander korrespondierende Sicherungselemente (7,11) gegeneinander gegen Verdrehen gesichert sind, wobei das Sicherungselement (7) des Führungselements (3) ein Vorsprung an dem Mantel des Führungselements (3) ist, und das Sicherungselement (11) der Buchse (10) eine an der Innenfläche und / oder Stirnfläche der Buchse (10) ausgebildete Ausnehmung ist.

2. Betätigungselement nach Anspruch 1, **dadurch gekennzeichnet, dass** die Betätigungsstange (2) einen im Querschnitt unrunden Abschnitt (A₁) aufweist, der innerhalb einer Öffnung (5) des Führungselements (3) verdrehsicher geführt ist.

3. Betätigungselement nach Anspruch 2, **dadurch gekennzeichnet, dass** der Abschnitt (A₁) und die Öffnung (5) einen mehreckigen Querschnitt aufweisen.

4. Betätigungselement nach einem der Ansprüche 1 bis 3, **dadurch gekennzeichnet, dass** das Führungselement (3) an seinem der Verdrehsicherung abgewandten Ende eine Nut (9) zur Aufnahme eines Sicherungsrings (13) aufweist.

5. Betätigungselement nach einem der vorhergehenden Ansprüche, **gekennzeichnet durch** einen das Innere des Gehäuses (4) abdichtenden Faltenbalg (14).

6. Betätigungselement nach Anspruch 5, **dadurch gekennzeichnet, dass** das eine Ende (14b) des Faltenbalgs (14) an der Buchse (10) und das andere Ende (14b) an einem runden Längsabschnitt (A₂)der Betätigungsstange (2) festgelegt ist.

7. Betätigungselement nach einem der vorangehenden Ansprüche, **dadurch gekennzeichnet, dass** eine Flanschplatte (12) über Verschraubungen (15a, 15b) zur Montage des Betätigungselements am Achslift an dem Gehäuse (4) festgelegt ist.

8. Betätigungselement nach einem der vorhergehenden Ansprüche, **gekennzeichnet durch** eine am freien Ende der Betätigungsstange (2) angeordnete frei drehbar gelagerte Rolle.

9. Nachrüstsatz für Achsliftbetätigungselemente, mit einem innerhalb einer Buchse (10) angeordneten Führungselement (3) zur Führung einer Betätigungsstange, wobei das Führungselement (3) eine Öffnung (5) zur verdrehsicheren Führung der Betätigungsstange aufweist, **dadurch gekennzeichnet,**
**dass** die Buchse (10) mit einer am Gehäuse des Achsliftbetätigungselements festlegbaren Flanschplatte (12) verbunden ist, wobei das Führungselement (3) und die Buchse (10) über miteinander korrespondierende Sicherungselemente (7, 11) gegeneinander gegen Verdrehen gesichert sind, wobei das Sicherungselement (7) des Führungselements (3) ein Vorsprung an dem Mantel des Führungselements (3) ist, und das Sicherungselement (11) der Buchse (10) eine an der Innenfläch und / oder Stirnfläche der Buchse (10) ausgebildete Ausnehmung ist.

10. Nachrüstsatz nach einem der vorangehenden Ansprüche, **dadurch gekennzeichnet, dass** das Führungselement (3) einen Flanschabschnitt (8) aufweist, der gegen eine Stirnseite der Buchse (10) anliegt.

11. Nachrüstsatz nach einem der vorangehenden Ansprüche, **dadurch gekennzeichnet, dass** das Führungselement (3) an seinem der Verdrehsicherung abgewandten Ende eine Nut (9) zur Aufnahme eines Sicherungsrings (13) aufweist.

## Claims

1. An actuating element for axle lifts of air-sprung vehicle axles with an actuating rod (2) movable along a guide element (3), wherein the actuating rod (2) is guided inside the guide element (3) in a manner preventing it from turning, **characterized in that** the guide element (3) is arranged in a manner preventing it from turning with respect to a housing (4) inside a bush (10) fixed with respect to the housing, wherein the guide element (3) and the bush (10) are prevented from turning with respect to each other by way of securing elements (7, 11) corresponding to each other, wherein the securing element (7) of the guide element (3) is a projection on the covering of the guide element (3) and the securing element (11) of the bush (10) is a recess formed on the inner face and/or the end face of the bush (10).

2. An actuating element according to claim 1, **characterized in that** the actuating rod (2) has a portion (A₁) which is non-round in cross-section and which is guided inside an opening (5) in the guide element (3) in a manner preventing it from turning.

3. An actuating element according to claim 2, **characterized in that** the portion (A₁) and the opening (5) have a polygonal cross-section.

4. An actuating element according to any one of claims 1 to 3, **characterized in that** the end of the guide element (3) facing away from the means preventing rotation has a groove (9) for receiving a circlip (13).

5. An actuating element according to any one of the preceding claims, **characterized by** a folding bellows (14) which seals the interior of the housing (4).

6. An actuating element according to claim 5, **characterized in that** one end (14b) of the folding bellows (14) is fixed to the bush (10) and the other end (14b) is fixed to a round longitudinal portion (A₂) of the actuating rod (2).

7. An actuating element according to any one of the preceding claims, **characterized in that** a flange plate (12) is fixed to the housing (4) by way of bolt fastenings (15a, 15b) in order to mount the actuating element on the axle lift.

8. An actuating element according to any one of the preceding claims, **characterized by** a roll arranged at the free end of the actuating rod (2) and mounted so as to be freely rotatable.

9. A retrofit kit for axle lift actuating elements, with a guide element (3) arranged inside a bush (10) for guiding an actuating rod, wherein the guide element (3) has an opening (5) for guiding the actuating rod in a manner preventing it from turning, **characterized in that** the bush (10) is connected to a flange plate (12) capable of being fixed to the housing of the axle lift actuating element, wherein the guide element (3) and the bush (10) are prevented from turning with respect to each other by way of securing elements (7, 11) corresponding to each other, wherein the securing element (7) of the guide element (3) is a projection on the covering of the guide element (3)
and the securing element (11) of the bush (10) is a recess formed on the inner face and/or the end face of the bush (10).

10. A retrofit kit according to any one of the preceding claims, **characterized in that** the guide element (3) has a flange portion (8) which rests against an end face of the bush (10).

11. A retrofit kit according to any one of the preceding claims, **characterized in that** the end of the guide element (3) facing away from the means preventing rotation has a groove (9) for receiving a circlip (13).

## Revendications

1. Élément de manoeuvre pour des systèmes de relevage pour des essieux à suspension pneumatique, comportant une tige de manoeuvre (2) mobile le long d'un élément de guidage (3), ladite tige de manoeuvre (2) étant logée de manière immobile en rotation à l'intérieur de l'élément de guidage (3),
**caractérisé en ce que** l'élément de guidage (3) est agencé de manière immobile en rotation par rapport à un carter (4) à l'intérieur d'une douille (10) solidaire du carter, l'élément de guidage (3) et la douille (10) étant immobilisés en rotation l'un par rapport à l'autre par des éléments d'arrêt (7, 11) correspondant entre eux, l'élément d'arrêt (7) de l'élément de guidage (3) étant une saillie sur la paroi périphérique de l'élément de guidage (3), et l'élément d'arrêt (11) de la douille (10) étant un évidement ménagé dans la face intérieure et/ou la face frontale de la douille (10).

2. Élément de manoeuvre selon la revendication 1, **caractérisé en ce que** la tige de manoeuvre (2) comporte un tronçon (A₁) à section non ronde, lequel est logé de manière immobile en rotation à l'intérieur d'un orifice (5) de l'élément de guidage (3).

3. Élément de manoeuvre selon la revendication 2, **caractérisé en ce que** le tronçon (A₁) et l'orifice (5) ont une section polygonale.

4. Élément de manoeuvre selon l'une quelconque des revendications 1 à 3, **caractérisé en ce que** l'élément de guidage (3), au niveau de son extrémité détournée du moyen d'immobilisation en rotation, comporte une rainure (9) destinée à recevoir un circlips (13).

5. Élément de manoeuvre selon l'une quelconque des revendications précédentes, **caractérisé par** un soufflet (14) assurant l'étanchéité de l'intérieur du carter (4).

6. Élément de manoeuvre selon la revendication 5, **caractérisé en ce que** l'une des extrémités (14a) du soufflet (14) est fixée sur la douille (10), et l'autre extrémité (14b) est fixée sur un tronçon longitudinal (A₂) rond de la tige de manoeuvre (2).

7. Élément de manoeuvre selon l'une quelconque des revendications précédentes, **caractérisé en ce qu'**une bride plate (12) est fixée contre le carter (4) par des vissages (15a, 15b) pour le montage de l'élément de manoeuvre sur le système de relevage d'un essieu.

8. Élément de manoeuvre selon l'une quelconque des revendications précédentes, **caractérisé par** un rouleau monté librement rotatif sur l'extrémité libre de la tige de manoeuvre (2).

9. Ensemble de post-équipement pour des éléments de manoeuvre de systèmes de relevage pour essieux, comportant un élément de guidage (3), agencé à l'intérieur d'une douille (10), pour le guidage d'une tige de manoeuvre, l'élément de guidage (3) comportant un orifice (5) pour le guidage immobile en rotation de la tige de manoeuvre,
**caractérisé en ce que** la douille (10) est reliée à une bride plate (12), propre à être fixée sur le carter de l'élément de manoeuvre du système de relevage pour essieu, l'élément de guidage (3) et la douille (10) étant immobilisés en rotation l'un par rapport à l'autre par des éléments d'arrêt (7, 11) correspondant entre eux, l'élément d'arrêt (7) de l'élément de guidage (3) étant une saillie sur la paroi périphérique de l'élément de guidage (3), et l'élément d'arrêt (11) de la douille (10) étant un évidement ménagé dans la face intérieure et/ou la face frontale de la douille (10).

10. Ensemble de post-équipement selon l'une quelconque des revendications précédentes, **caractérisé en ce que** l'élément de guidage (3) comporte une partie formant bride (8) en appui contre une face frontale de la douille (10).

11. Ensemble de post-équipement selon l'une quelconque des revendications précédentes, **caractérisé en ce que** l'élément de guidage (3), au niveau de son extrémité détournée du moyen d'immobilisation en rotation, comporte une rainure (9) destinée à recevoir un circlips (13).
